# EUROPÄISCHE PATENTANMELDUNG

(11) **EP 0 919 456 A2**
(43) Veröffentlichungstag der Anmeldung: **02.06.1999**
(21) Anmeldenummer: 98122041.1
(22) Anmeldetag: 20.11.1998
(51) Int. Cl.: B62D 65/00

(54) **Verfahren und Anlage zum Einbauen von Fahrzeugteilen in die Karosserie eines Kraftfahrzeugs**

(30) Priorität: 28.11.1997 DE 29721038 U; 08.04.1998 DE 19815682
(71) Anmelder: EKUMA WERKZEUG UND MASCHINENBAU GMBH, D-66663 Merzig (DE)
(72) Erfinder: Kurtz, Günter A., 66802 Überherrn (DE)
(74) Vertreter: Bernhardt, Winfrid, Dr.-Ing.

(57) **Zusammenfassung**

Eine Anlage zum Einbauen von Fahrzeugteilen in die Karosserie eines Kraftfahrzeugs ist gekennzeichnet durch
eine Fertigungslinie, entlang derer in einer Führung (1) jeweils eine Karosserie (4) tragende Halterungen (2) verfahrbar sind,
eine Anzahl unter genauer Positionierung von unten an eine Karosserie (4) ansetzbarer Traggestelle (10), die eine Mehrzahl von Aufnahmen (24;28;40) für in die Karosserie einzubauende Fahrzeugteile (6;8;9) an solcher Stelle aufweisen, daß die Fahrzeugteile (6;8;9) nach dem Ansetzen des Traggestells (10) an die Karosserie (4) ihre vorgesehene Einbaustellung einnehmen.
einen Kreislauf der Traggestelle (10), der auf einem Teil (11) seiner Länge mit der Fertigungslinie zusammenfällt und auf einem anderen Teil (12) seiner Länge zum Bestücken der Traggestelle mit den Fahrzeugteilen vorgesehen ist, und
in Anordnung auf dem ersteren Teil (11) des Kreislaufs
eine Einrichtung (31,32) zum Anheben der Traggestelle (10) und/oder Absenken der Karosserieen (4), an der das Traggestell an der Karosserie und/oder einer Halterung der Karosserie befestigt wird, um später mit der Karosserie auf einer Fertigungslinie weiterbewegt zu werden,
eine Schraubeinrichtung (35) mit selbsttätig in das Traggestell (10) hinein vorschiebbaren einzelnen Schraubern
und eine Einrichtung (17) zum Absenken der Traggestelle (10) und/oder Anheben der Karosserieen, an der das Traggestell wieder abgenommen wird.

## Beschreibung

Die Erfindung bezieht sich auf ein Verfahren zum Einbauen von Fahrzeugteilen in die Karosserie eines Kraftfahrzeugs.
Sie bezieht sich ferner auf eine Anlage zum Durchführen des Verfahrens.

Der Erfindung liegt die Aufgabe zugrunde, eine besonders leistungsfähige Verfahrensweise und Anlage dieser Art zu schaffen.

Gemäß der Erfindung wird dieser Zweck in der Weise erfüllt,
daß die Fahrzeugteile auf einem Traggestell in eine Stellung gebracht werden, die bei Positionierung des Traggestells an der Karosserie ihre vorgesehene Einbaustellung ist,
daß das Traggestell unter genauer Positionierung von unten an die Karosserie angesetzt wird,
daß selbsttätige Schraubvorrichtungen in das Traggestell hinein vorgeschoben und in Eingriff gebracht werden
und daß nach Betätigen der, die Fahrzeugteile an der Karosserie befestigenden. Schraubvorrichtungen das Traggestell nach unten abgenommen und entfernt wird.

Hier wird die bisherige, unmittelbare Montage der Kraftfahrzeugteile in der Karosserie ersetzt durch eine Zwischenmontage auf dem Traggestell. Es entfällt die Über-Kopf-Arbeit, die auf die Dauer zu Körperschäden führt. Die Zwischenmontage auf dem Traggestell kann in ergonomisch günstiger Körperhaltung und -bewegung ausgeführt werden.

Nach einer besonders vorteilhaften Ausgestaltung der Erfindung wird das Traggestell an der Karosserie und/oder einer Halterung der Karosserie befestigt und mit der Karosserie auf einer Fertigungslinie weiterbewegt.
Grundsätzlich wäre es aber auch möglich, das Traggestell während der Schraubvorgänge ohne Befestigung an der Karosserie und/oder der Halterung in der angehobenen Stellung zu halten, in der die Fahrzeugteile in die Karosserie eingefügt sind.

Eine erfindungsgemäße Anlage ist gekennzeichnet durch
eine Fertigungslinie, entlang derer in einer Führung jeweils eine Karosserie tragende Halterungen verfahrbar sind,
eine Anzahl unter genauer Positionierung von unten an eine Karosserie ansetzbarer Traggestelle, die eine Mehrzahl von Aufnahmen für in die Karosserie einzubauende Fahrzeugteile an solcher Stelle aufweisen, daß die Fahrzeugteile nach dem Ansetzen des Traggestells an die Karosserie ihre vorgesehene Einbaustellung einnehmen,
einen Kreislauf der Traggestelle, der auf einem Teil seiner Länge mit der Fertigungslinie zusammenfällt und auf einem anderen Teil seiner Länge zum Bestücken der Traggestelle mit den Fahrzeugteilen vorgesehen ist,
und in Anordnung auf dem ersteren Teil des Kreislaufs
eine Enrichtung zum Anheben der Traggestelle und/oder Absenken der Karosserieen,
eine Schraubeinrichtung mit selbsttätig in das Traggestell hinein vorschiebbaren einzelnen Schraubern
und eine Einrichtung zum Absenken der Traggestelle und/oder Anheben der Karosserieen.

Die erwähnte Weiterbildung der Erfindung kennzeichnet sich in der Anlage durch an der Einrichtung zum Anheben der Traggestelle und/oder Absenken der Karosserie zu betätigende und an der Einrichtung zum Absenken der Traggestelle und/oder der Karosserie zu lösende Mittel zum Befestigen der Traggestelle an der Karosserie und/oder der Halterung, vorzugsweise an den Traggestellen angeordnete, vorzugsweise klemmende, Mittel zum Befestigen an der Halterung.

Weitere vorteilhafte Ausgestaltungen sind durch die Unteransprüche gekennzeichnet.

Die Zeichnungen geben ein Ausführungsbeispiel der Erfindung wieder.
- Fig. 1: zeigt eine Anlage zum Einbauen von Fahrzeugteilen, die eine die Kraftstoff- und Bremsflüssigkeitseinrichtungen bildende Baugruppe darstellen, in die Karosserie eines Kraftfahrzeugs in isometrischer Darstellung,
- Fig. 2: zeigt einen Ausschnitt aus Fig. 1 in größerem Maßstab,
- Fig. 3: zeigt einen weiteren Ausschnitt aus Fig. 1 in noch einmal größerem Maßstab und
- Fig. 4: zeigt ein Einzelteil in isometrischer Darstellung in weiter größerem Maßstab.

Entlang einer Fertigungslinie sind in einer Führung 1 hängende Halterungen 2 mittels eines nicht dargestellten Antriebs verfahrbar, die jeweils auf an ihren unteren Enden nach innen vorspringenden Halteteilen 3 eine Karosserie 4 tragen. Auf den Halteteilen 3 nach oben stehende Zentrierbolzen 5 fassen jeweils in eine Ausnehmung der Karosserie 4, die damit genau in der Halterung 2 positioniert ist.

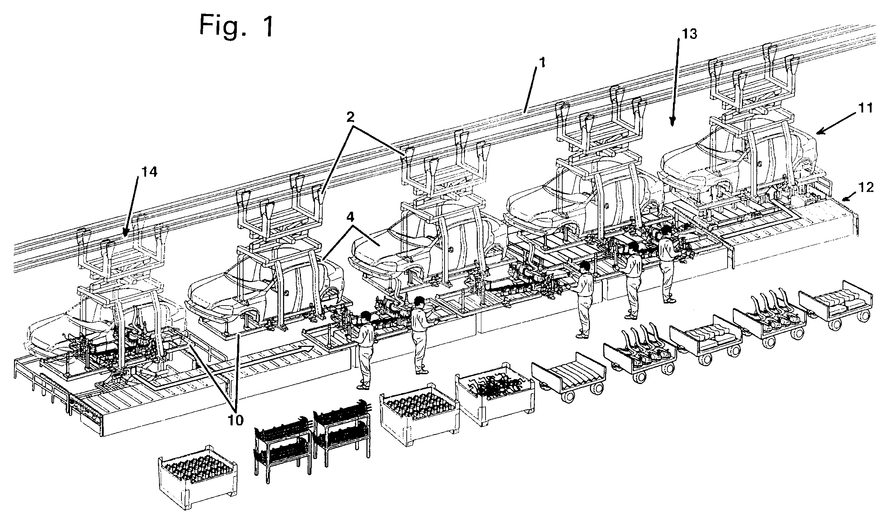

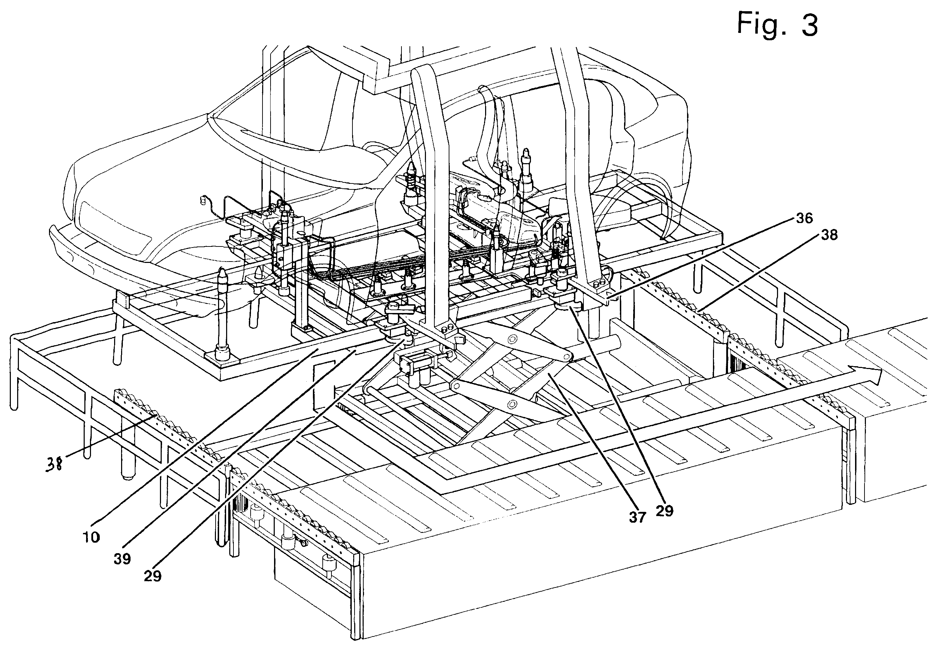

In Fig. 1 ist ein Ausschnitt aus der Fertigungslinie gezeigt, in der, siehe im einzelnen Fig. 3, der Tank 6 mit Spannbändern, das Einfüllrohr 7 zum Tank, ein die Kraftstoffleitung vom Tank zum Motor sowie Bremsleitungen umfassendes Leitungsbündel 8 und eine ABS-Einheit 9 in der Karosserie 4 montiert werden, z.B. ferner ein lastabhängiger Regler, Hitzeschutzbleche und eine Anhängerkupplung.

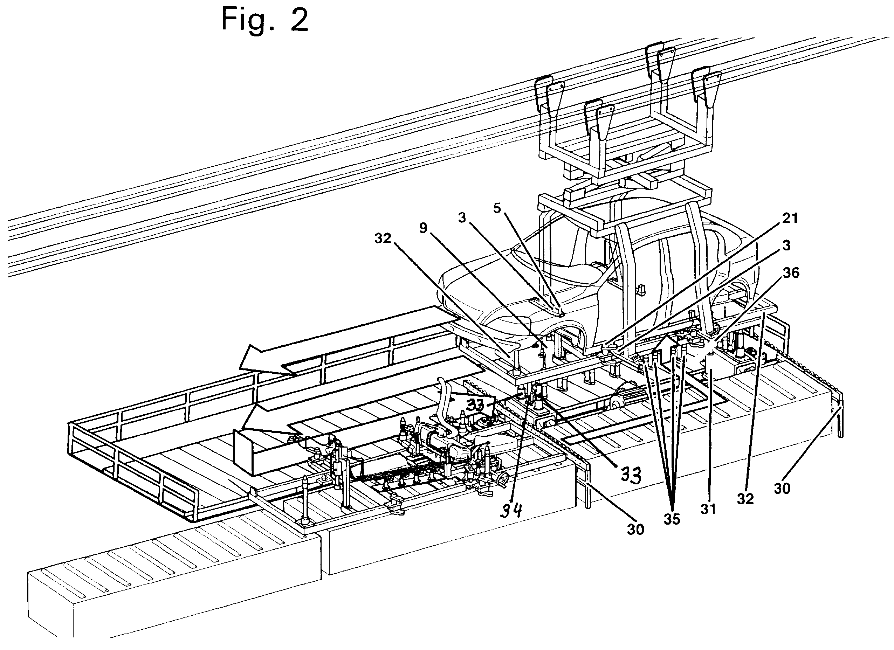

Die genannten Teile werden in einer Zwischenmontage auf Traggestellen 10 angeordnet. Die Traggestelle 10 werden in einem Kreislauf bewegt, der auf einem Teil 11 seiner Länge unter der Führung 1 verläuft und auf einem anderen Teil parallel dazu zurückführt. Dieser andere Teil des Kreislaufs wird durch eine Rollenbank 12 gebildet, auf der die Zwischenmontage stattfindet. Der Teil 11 umfaßt eine Andock- und Schraubstation 13 sowie eine Abdockstation 14. Die beiden Stationen sind in Fig. 2 bzw. Fig. 3 im einzelnen dargestellt.

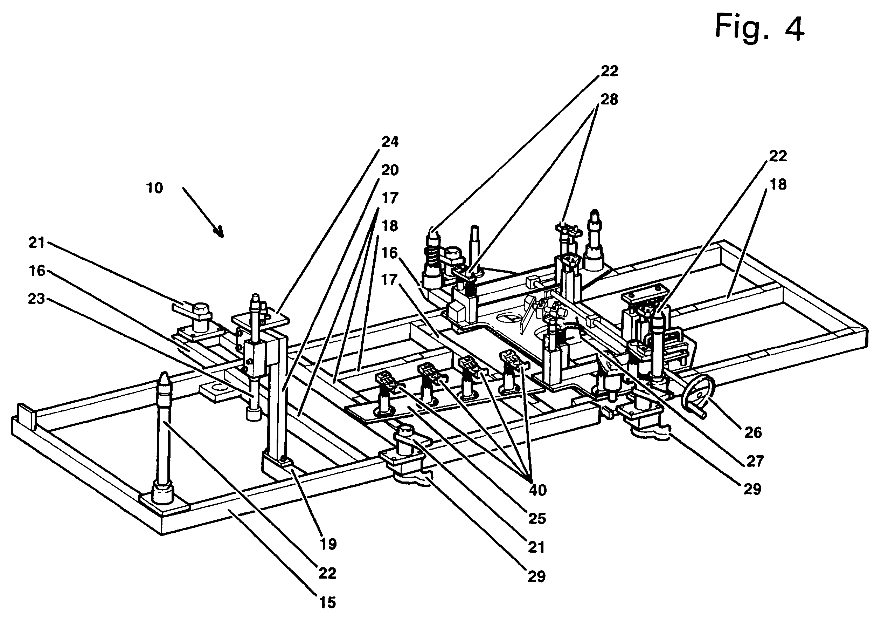

Fig. 4 läßt ein Traggestell 10 im einzelnen erkennen.
Es ist in Leichtbauweise aus rahmenförmig zusammengesetzten Profilen ausgeführt. Ein rechteckiger Rahmen 15 mit Konsolen 16 an seiner einen Längsseite bildet ein Grundgestell. Darin sind nach Bedarf durch Quertraversen 17 und Längstraversen 18 weitere, kleinere Rahmen geschaffen. Auch ein nur einseitig befestigter Arm 19 mit einer Tragsäule 20 ist zu erkennen.

Das erwähnte Grundgestell wird unter genauer Positionierung an der Karosserie 4 von unten an die Halteteile 3 der Halterung 2 angelegt und durch über die Halteteile 3 geschwenkte Klemmbacken 21 an der Halterung 2 befestigt.
Die betreffenden Anlagestellen und Klemmbacken 21 sind ungefähr auf den Ecken eines Rechtecks angeordnet an dem einen Längsschenkel des Rahmens 15 und gegenüber an den Konsolen 16.

Für seine Positionierung an der Karosserie 4 weist das Traggestell 10 drei senkrecht nach oben stehende, in Löcher der Karosserie greifende Zentrierdorne 22 auf. Sie sind auf dem vorgenannten Längsschenkel des Rahmens 15 nahe der einen erwähnten Anlagestelle, auf derselben Seite des Rahmens 15 an der einen Ecke und auf der anderen Seite des Rahmens auf der einen Konsole 16 angeordnet.

Auf dem Traggestell 10 sind Aufnahmen für die zu montierenden Fahrzeugteile angebracht. Die Aufnahmen sind, was nicht immer dargestellt ist, zur Anpassung an verschiedene Fahrzeugmodelle, ggf. auch zum Ausgleich von Toleranzen, in Längsrichtung, Querrichtung und/oder Höhe verstellbar. Im einzelnen:
Auf der Tragsäule 20 ist an einer höhenverstellbaren Spindel 23 eine Aufnahme 24 für die ABS-Einheit 9 angeordnet.
Zwei der Quertraversen 17 tragen eine Brücke 25 mit Aufnahmen 40 für das Leitungsbündel 8.

Eine mittels eines Stelltriebes 26 verschiebbare Plattform 27 trägt Aufnahmen 28 für den Tank. Die Plattform 27 ist verschiebbar zwischen der vorgesehenen Einbaustellung und einer ergonomisch günstigeren Bestückungsstellung.

Fig. 4 und die vorstehende Beschreibung dazu dienen der Erläuterung und sind, wie schon angedeutet, nicht vollständig. Erwähnt seien hier noch nicht dargestellte pneumatische Betätigungseinrichtungen für die Klemmbacken 21 sowie für unter den Klemmbacken 21 angeordnete Haken 29, auf die unten noch eingegangen wird.

Wie in Fig. 1 dargestellt, werden auf der Rollenbank 12 die Traggestelle 10 mit den in die Karosserie einzubauenden Fahrzeugteilen bestückt. Die Rollenbank 12 ist aus Teilen mit getrennten Antrieben zusammengesetzt. Die Weiterbewegung der Traggestelle 11 erfolgt vorzugsweise schubweise. Am Ende der Rollenbank 12 werden die Gestelle mittels einer heb- und senkbaren Querfördereinrichtung 30 in die Andock- und Schraubstation 13 überführt.

In der Andock- und Schraubstation 13 sind eine Einrichtung zum Anheben der Traggestelle und eine Schraubeinrichtung zu einer auf einem kurzen Abschnitt der Fertigungslinie synchron mit der Halterung 2 der Karosserie 4 mitbewegten und nach Abschluß der Schraubungen zur Ausgangsstellung zurückgefahrenen Einheit zusammengefaßt.
Die Einrichtung zum Anheben der Traggestelle 10 besteht im wesentlichen aus einem auf vier Hubeinheiten 31 angeordneten Hubtisch 32. Die Hubeinheiten 31 weisen jeweils zwischen zwei Stangenführungen 33 einen Hydraulikzylinder 34 auf.

Die Schraubeinrichtung besteht aus einer Vielzahl in den Hubtisch 32 integrierter selbsttätiger Schraubvorrichtungen 35 mit jeweils einem noch einmal nach oben vorschiebbaren Schrauber.

An der genannten Einheit von Einrichtung zum Anheben und Schraubeinrichtung sind ferner vier nicht gezeichnete Säulen angebracht als Basen, von denen aus keilförmig-prismische Zentrierstücke in hohlkeilförmige Fangtaschen 36 vorschiebbar sind, die jeweils an Verlängerungen der Halteteile 3 nach der Außenseite der Halterung 2 ausgebildet sind.

Das mit den Fahrzeugteilen bestückte Traggestell 10 gelangt auf der angehobenen Querfördereinrichtung 30 über den Hubtisch 32 und wird durch Absenken der Querfördereinrichtung 30 auf dem Hubtisch 32 abgelegt. Die vorgesehene genaue Lage des Traggestells 10 auf dem Hubtisch 32 kann dabei durch eine Zentrierung eingestellt werden.
Ist die Halterung 2 mit der Karosserie angekommen, so wird die genannte Einheit in Bewegung gesetzt und fährt synchron mit der Halterung. Die erwähnten Zentrierstücke werden in die Fangtaschen vorgeschoben und positionieren damit die Halterung 2 und die in dieser positionierte Karosserie 4 gegenüber der Einheit. Jetzt wird der Hubtisch 32 mit dem Traggestell 10 angehoben. Die Zentrierdome 22 positionieren bei ihrem Eingriff in die ihnen zugeordneten Löcher der Karosserie das Traggestell 10 gegenüber dieser. Die dafür erforderliche geringfügige waagerechte Verschiebbarkeit ist z.B. in den Auflagern des Hubtisches 32 auf den Hubeinheiten 31 eingerichtet.
Jetzt werden die Klemmbacken 21 von ihren pneumatischen Betätigungseinrichtungen über die Halteteile 3 geschwenkt und befestigen damit das Traggestell 10 an der Halterung 2.

Danach werden die Schrauber vorgeschoben.
Die, auf der Rollenbank 12 eingesetzten vorzugsweise ihr Gewinde selbst schneidenden, Schrauben sitzen in an den Aufnahmen angeordneten köcherartigen Halterungen, die auch als Zentrierungen für die Schrauber dienen. Die Anpassung der Schrauber wird erlaubt durch eine taumelbewegliche Lagerung der Schraubvorrichtungen 35 in dem Hubtisch 32.

Nach Abschluß des Schraubvorganges bewegen sich die Schrauber zurück und der Hubtisch 32 wird abgesenkt. Die Zentrierstücke ziehen sich aus den Fangtaschen 36 zurück.

Die somit freigekommene Einheit mit der Einrichtung zum Anheben der Traggestelle und der Schraubeinrichtung fährt in die Ausgangsstellung zurück.
Das Traggestell 10 bleibt noch mit der Halterung 2 verbunden und bewegt sich mit dieser weiter nach der Abdockstation 14.

Die in Fig. 3 dargestellte Abdockstation 14 besteht im wesentlichen aus einer in Scherenkonstruktion ausgeführten Einrichtung 37 zum Absenken der Traggestelle in Verbindung mit einer Querfördereinrichtung 38. Die Einrichtung 37 zum Absenken ist ähnlich wie die Einrichtung zum Anheben und die Schraubeinrichtung synchron mit der Weiterbewegung der Halterungen ein Stück verfahrbar und dann schnell zurückfahrbar. Ist eine Karosserie 4 mit einem Traggestell 10 angekommen, so setzt sich die Einrichtung 37 aus ihrer Ausgangsstellung heraus synchron mit der Halterung 2 in Bewegung und legt sich, einen kurzen Hub ausführend, mit einem Tragrahmen 39 von unten an das Traggestell 10 an. Die oben erwähnten Haken 29 werden betätigt; sie verklammern das Traggestell 10 mit der Einrichtung 37. Die Klemmbacken 21 werden zurückgeschwenkt. Die Einrichtung 37 senkt sich ab und nimmt damit das Traggestell 10 aus der Karosserie 4 heraus. Sie beendet ihre Fortbewegung und legt das Traggestell 10 auf der, angehobenen, Querfördereinrichtung 38 ab. Auf dieser gelangt das Traggestell über die Rollenbank 12, auf der es abgesetzt wird.
Der Abstand zwischen der Andock- und Schraubstation 13 und der Abdockstation 14 richtet sich nach der für das Bestücken der Traggestelle 10 benötigten Zeit und der dementsprechend benötigten Länge der Rollenbank 12.

## Patentansprüche

1. Verfahren zum Einbauen von Fahrzeugteilen in die Karosserie eines Kraftfahrzeugs, dadurch gekennzeichnet,
daß die Fahrzeugteile auf einem Traggestell in eine Stellung gebracht werden, die bei Positionierung des Traggestells an der Karosserie ihre vorgesehene Einbaustellung ist,
daß das Traggestell unter genauer Positionierung von unten an die Karosserie angesetzt wird,
daß selbsttätige Schraubvorrichtungen in das Traggestell hinein vorgeschoben und in Eingriff gebracht werden
und daß nach Betätigen der, die Fahrzeugteile an der Karosserie befestigenden, Schraubvorrichtungen das Traggestell nach unten abgenommen und entfernt wird.

2. Verfahren nach Anspruch 1,
dadurch gekennzeichnet,
daß das Traggestell an der Karosserie und/oder einer Halterung der Karosserie befestigt wird und mit der Karosserie auf einer Fertigungslinie weiterbewegt wird.

3. Anlage zum Durchführen eines Verfahrens nach Anspruch 1 oder 2,
gekennzeichnet durch
eine Fertigungslinie, entlang derer in einer Führung (1) jeweils eine Karosserie (4) tragende Halterungen (2) verfahrbar sind,
eine Anzahl unter genauer Positionierung von unten an eine Karosserie (4) ansetzbarer Traggestelle (10), die eine Mehrzahl von Aufnahmen (24;28:40) für in die Karosserie einzubauende Fahrzeugteile (6;8;9) an solcher Stelle aufweisen, daß die Fahrzeugteile (6;8;9) nach dem Ansetzen des Traggestells (10) an die Karosserie (4) ihre vorgesehene Einbaustellung einnehmen,
einen Kreislauf der Traggestelle (10), der auf einem Teil (11) seiner Länge mit der Fertigungslinie zusammenfällt und auf einem anderen Teil (12) seiner Länge zum Bestücken der Traggestelle mit den Fahrzeugteilen vorgesehen ist, und
in Anordnung auf dem ersteren Teil (11) des Kreislaufs
eine Einrichtung (31,32) zum Anheben der Traggestelle (10) und/oder Absenken der Karosserieen (4),
eine Schraubeinrichtung (35) mit selbsttätig in das Traggestell (10) hinein vorschiebbaren einzelnen Schraubern
und eine Einrichtung (17) zum Absenken der Traggestelle (10) und/oder Anheben der Karosserieen.

4. Anlage nach Anspruch 3,
gekennzeichnet durch an der Einrichtung (21,32) zum Anheben der Traggestelle (10) und/oder Absenken der Karosserien zu betätigende und an der Einrichtung (37) zum Absenken der Traggestelle (10) und/oder Anheben der Karosserie zu lösende Mittel (21) zum Befestigen der Traggestelle (10) an der Karosserie und/oder der Halterung (2), vorzugsweise an den Traggestellen (10) angeordnete, vorzugsweise klemmende, Mittel (21) zum Befestigen an der Halterung (2).

5. Anlage nach Anspruch 3 oder 4,
dadurch gekennzeichnet,
daß die Traggestelle (10) zu ihrer genauen Positionierung an der Karosserie (4), vorzugsweise nahe ihrem Rand, senkrecht nach oben stehende, in Löcher der Karosserie (4) greifende Zentrierdorne (22) aufweisen.

6. Anlage nach einem der Ansprüche 3 bis 5,
dadurch gekennzeichnet,
daß die Aufnahmen (24;28;40) mindestens teilweise zur Anpassung, insbesondere an verschiedene Fahrzeugmodelle, verstellbar auf den Traggestellen (10) angeordnet sind.

7. Anlage nach einem der Ansprüche 3 bis 6,
dadurch gekennzeichnet,
daß die Aufnahmen (28) teilweise zwischen einer Bestückungsstellung und der vorgesehenen Einbaustellung verschiebbar auf den Traggestellen (10) angeordnet sind.

8. Anlage nach einem der Ansprüche 3 bis 7,
dadurch gekennzeichnet,
daß die Traggestelle (10) in Leichtbauweise aus rahmenförmig zusammengesetzten Profilen ausgeführt sind.

9. Anlage nach einem der Ansprüche 3 bis 8,
dadurch gekennzeichnet,
daß an den Aufnahmen (24;28;40) köcherartige Halterungen angeordnet sind, in denen die, vorzugsweise selbstschneidenden, Schrauben vorschiebbar sitzen.

10. Anlage nach einem der Ansprüche 3 bis 9,
dadurch gekennzeichnet,
daß an den die Karosserieen (4) tragenden Halterungen (2) seitlich, vorzugsweise hohlkeilförmige, Fangtaschen (36) ausgebildet sind, in die von mit der Schraubeinrichtung (35), vorzugsweise ferner mit der Einrichtung zum Anheben der Traggestelle, verbundenen Basen aus, vorzugsweise keilförmig-prismische, Zentrierstücke vorschiebbar sind.

11. Anlage nach einem der Ansprüche 3 bis 10,
dadurch gekennzeichnet,
daß die Einrichtung (31,32) zum Anheben der Traggestelle (10) und die Schraubeinrichtung (35) als eine auf einem Abschnitt der Fertigungslinie synchron mit der Halterung (2) der Karosserie (4) mitbewegte und nach Abschluß der Schraubungen zur Ausgangsstellung zurückgefahrene Station (13) angeordnet sind.

12. Anlage nach einem der Ansprüche 3 bis 10,
dadurch gekennzeichnet,
daß die Traggestelle (10) Aufnahmen (28) für den Tank (6) mit Spannbändern, das Einfüllrohr (7) zum Tank, ein die Kraftstoffleitung vom Tank zum Motor sowie Bremsleitungen umfassendes Leitungsbündel (8) und eine ABS-Einheit (9) aufweisen, vorzugsweise ferner für einen lastabhängigen Regler, Hitzeschutzbleche und/oder eine Anhängerkupplung.
